# EUROPÄISCHE PATENTSCHRIFT

(11) **EP 2 666 054 B1**
(45) Veröffentlichungstag und Bekanntmachung des Hinweises auf die Patenterteilung: **04.09.2019**
(21) Anmeldenummer: 12700680.7
(22) Anmeldetag: 18.01.2012
(51) Int. Cl.: G02C 7/10, G02B 5/08, G02C 7/02, G09F 13/16

(54) **DURCHSICHTIGE SCHEIBE MIT VERSPIEGELUNG**
MIRRORED TRANSPARENT DISC
DISQUE TRANSPARENT AVEC REVETEMENT EN MIROIRS

(30) Priorität: 18.01.2011 AT 682011
(43) Veröffentlichungstag der Anmeldung: 27.11.2013
(73) Patentinhaber: Invisilux GmbH, 22113 Oststeinbeck (DE)
(72) Erfinder: SCHAUER, Josef, 5400 Hallein (AT)
(74) Vertreter: Puchberger & Partner Patentanwälte
(86) Internationale Anmeldenummer: PCT/EP2012/050684
(87) Internationale Veröffentlichungsnummer: WO 2012/098144

(56) Entgegenhaltungen:
- GB-A- 731 661
- US-A- 4 715 702
- US-A- 4 989 967
- US-A1- 2005 018 131
- US-B1- 6 793 339

## Beschreibung

Die Erfindung betrifft eine zur Durchsicht geeignete Scheibe aus Glas oder Kunststoff, auf der Verspiegelungsmuster für Werbezwecke vorgesehen sind.

Aus dem Stand der Technik ist es bekannt, auf optischen Scheiben wie Brillengläsern aus Glas oder Kunststoff Verspiegelungsschichten anzubringen. Diese Verspiegelungsschichten werden durch Aufdampfen von Interferenzschichten im Vakuum erreicht. Durch Wahl der Dicke der aufgedampften Interferenzschicht und des aufgedampften Materials kann eine verstärkende Interferenz auftreten, wodurch es zu einer Spiegelwirkung kommt. Durch unterschiedliche Dicken der Interferenzschichten können unterschiedliche Reflexionsfarben erreicht werden.

Für verschiedene Anwendungsbereiche, insbesondere Werbung, ist es wünschenswert, verspiegelte Flächen mit Mustern, Symbolen, Aufschriften und dergleichen zu versehen. Dabei sollen diese Anordnungen für den Durchblick nur geringen Einfluss haben, während auf der verspiegelten Seite der Spiegeleffekt deutlich die gewünschte Bemusterung erkennen lassen soll.

Anwendungsgebiete sind beispielsweise Sonnenbrillengläser, Augengläser, Schutzgläser, Schilder auf Helmen, Schutzhelme, Schutzbrillen, Scheiben und Folien jeglicher Art, die sich im Gesichtsbereich vor den Augen befinden. Damit kann z.B. Werbung auch in diesem Bereich vor den Augen gezeigt werden, was insbesondere für die Werbung in TV und Film, beispielsweise bei Sportveranstaltungen, von Interesse sein kann.

Beispiele für metallische Verspiegelungsmaterialien sind Blei, Zink, Silber, Gold, oder Aluminium. Es handelt sich hierbei um höher brechende Materialien, die den Lichtstrahl stärker ablenken als das Material der Scheibe. Das Verspiegelungsmaterial kann von einer durchsichtigen Schutzschicht abgedeckt werden.

Die US 4,715,702 A zeigt eine zur Durchsicht geeignete Scheibe auf der Verspiegelungsmuster für Werbezwecke vorgesehen sind, wobei die Scheibe als Verbund mehrerer Einzelscheiben ausgeführt ist. Eine Scheibe des Scheibenverbunds ist als ganzflächige Spiegelscheibe ausgeführt, und das Verspiegelungsmuster ergibt sich für den Betrachter dadurch, dass eine äußerste Scheibe in einem Teilbereich eingefärbt ist, und in einem anderen Teilbereich nicht eingefärbt ist. Dadurch wird der Blick von außenstehenden auf die Spiegelscheibe teilweise blockiert, und teilweise zugelassen; es ergibt sich ein Verspiegelungsmuster. Diese Lösung hat jedoch den Nachteil, dass ein komplizierter Verbundaufbau aus 3 Scheiben erforderlich ist, und außerdem eine ganzflächige Spiegelscheibe verwendetet werden muss.

Aus der GB 731,661 A ist eine zur Durchsicht geeignete Scheibe aus Glas oder Kunststoff bekannt, die als Verbund mehrerer, in unterschiedlichen Spektralbereichen reflektierender Einzelscheiben ausgeführt ist.

Die US 2005/018131 A1 zeigt eine zur Durchsicht geeignete Scheibe, die als Verbund mehrerer Einzelscheiben ausgeführt ist und eine schmalbandige Rugate-Filterscheibe umfasst, um schädliche UVA- und UVB-Strahlen zu reflektieren.

Weiters zeigt die US 6,793,339 B1 eine optische Sonnenbrille, die als Verbund zweier Einzelscheiben ausgeführt ist, wobei durch künstliches Aufrauen der Oberfläche einer der Einzelscheiben an der Schnittstelle zu einer Tönungsschicht ein Muster geschaffen wird, welches vom Betrachter der Sonnenbrille sichtbar ist, jedoch nicht von dessen Träger.

Die US 4,989,967 A schließlich zeigt ebenfalls eine Sonnenbrille, die als Verbund mehrerer Einzelscheiben ausgeführt ist, wobei zwischen den Einzelscheiben fluoreszierende Materialien angebracht sind, die in einem Muster angeordnet sind um in der Nacht sichtbar zu sein.

Aus der AT 505 720 B1 sind zur Durchsicht geeignete Scheiben aus Glas oder Kunststoff bekannt, die auf ihrer augenabgewandten Fläche unter Bildung einer oder mehrerer Musterflächen nebeneinanderliegende Bereiche verschiedener Verspiegelungsfarben oder Verspiegelungsintensitäten aufweisen. Dabei bezeichnet der Ausdruck 'augenabgewandt' jene Seite der Scheibe, die den Augen des Trägers abgewandt ist. Die Musterflächen der verspiegelten Bereiche erlauben es, beliebige verspiegelte Muster auf der Scheibe darzustellen, die von der augenabgewandten Seite der Scheibe, also insbesondere von einem Zuschauer, sichtbar sind.

Ein Problem dieser Scheiben besteht darin, dass der Träger beim Durchblick durch die Scheibe die aufgebrachten verspiegelten Bereiche als störend empfindet. Auch das Aufbringen einer Tönungsschicht oder einer Entspiegelungsschicht auf der augenzugewandten Seite der Scheibe, wie es in AT 505 720 B1 vorgeschlagen ist, bringt diesbezüglich keine vollständige Abhilfe. Eine Verwendung derartiger Scheiben ist deshalb in sicherheitskritischen Anwendungen problematisch.

Die technische Aufgabe der vorliegenden Erfindung liegt demnach darin, eine verbesserte Scheibe mit verspiegelten Bereichen zu schaffen, bei der einerseits von der augenabgewandten Seite klar die verspiegelten Bereiche erkennbar sind, und andererseits von der augenzugewandten Seite keinerlei Störungen des Durchblicks aufweist. Die Scheibe soll leicht und einfach herstellbar und insbesondere für sicherheitskritische Anwendungen geeignet sein.

Diese technische Aufgabe wird erfindungsgemäß durch eine Scheibe gemäß Anspruch 1 gelöst.

Der Träger der Scheibe, der sich auf der augenzugewandten Seite der Scheibe befindet, blickt durch den Verbund hindurch und somit durch sämtliche verspiegelte Bereiche. Der Beobachter, der sich auf der augenabgewandten Seite der Scheibe befindet, bemerkt jedoch nur den auf der augenabgewandten Seite der äußersten Einzelscheibe angebrachten verspiegelten Bereich. Der Träger und der Betrachter sehen somit unterschiedliche Muster: Der Träger sieht eine Überlagerung sämtlicher verspiegelter Bereiche, der Betrachter nur den äußersten verspiegelten Bereich. Indem auf einer der innenliegenden Einzelscheiben ein verspiegelter Bereich vorgesehen wird, der das Negativbild des auf der äußersten Einzelscheibe angebrachten verspiegelten Bereichs ist, wird erreicht, dass der Träger praktisch keine Inhomogenitäten beim Durchblicken bemerkt. Damit wird die erfindungsgemäße Aufgabenstellung gelöst.

Erfindungsgemäß ist vorgesehen, dass sich die verspiegelten Bereiche der Einzelscheiben nicht überlappen und ihre Vereinigung die gesamte Durchblickfläche der Scheibe bedeckt.

Insbesondere kann die Scheibe als Verbund einer ersten Einzelscheibe mit einem ersten verspiegelten Bereich und einer zweiten Einzelscheibe mit einem zweiten verspiegelten Bereich ausgeführt sein, wobei der zweite verspiegelte Bereich das negative Abbild des ersten verspiegelten Bereichs ist.

Als Abbild kann in diesem Zusammenhang eine vergrößerte, verkleinerte, verzerrte oder auch identische Kopie des jeweiligen Bereichs verstanden werden. Insbesondere kann vorgesehen sein, dass sich die verspiegelten Bereiche der jeweiligen Einzelscheiben zumindest bereichsweise überlappen, damit auch bei seitlicher Ansicht die Vereinigung der verspiegelten Bereiche die gesamte Durchblickfläche bedeckt. Ein Überlappungsbereich von 1% bis 5%, vorzugsweise 2% kann diesbezüglich vorgesehen sein. Dabei kann, je nach Anwendungsgebiet, der größere Bereich auf der augenzugewandten Seite oder auf der augenabgewandten Seite vorgesehen sein.

Weiters ist vorgesehen, dass sich die verspiegelten Bereiche jeweils auf den augenabgewandten Seiten der Einzelscheiben befinden. Zumindest eine der Einzelscheiben weist auf ihrer augenzugewandten Seite eine ganzflächige Verspiegelungsschicht oder Entspiegelungsschicht auf.

Erfindungsgemäß ist vorgesehen, dass die Einzelscheiben miteinander verklebt, verschmolzen oder verkittet sind. Weiters kann erfindungsgemäß vorgesehen sein, dass sich die verspiegelten Bereiche in ihrer Verspiegelungsfarbe und/oder Verspiegelungsintensität von den Einzelscheiben unterscheiden bzw. abheben.

Der verwendete Kleber kann insbesondere derart ausgewählt sein, dass er gegen UV-Strahlung und gegen Wärmeschwankungen resistent ist.

Die Einzelscheiben können auf ihren augenzugewandten Seiten ganzflächige Verspiegelungsschichten aufweisen, deren Intensität vorzugsweise maximal 50% der Intensität der Verspiegelung der verspiegelten Bereiche beträgt.

Weiters kann vorgesehen sein, dass die Einzelscheiben getönt sind und/oder eine Tönungsschicht unter den verspiegelten Bereichen aufweisen. Eine derartige Tönungsschicht hat insbesondere den Vorteil, dass die Verspiegelung im Vergleich zu einer ungetönten Scheibe besser zur Geltung kommt (besser spiegelt).

Eine oder mehrere der Verspiegelungsschichten, Entspiegelungsschichten oder Tönungsschichten können weiters zur Verbesserung des Spiegeleffektes fluoreszierende Substanzen enthalten.

Insbesondere kann die erste Einzelscheibe auf ihrer augenabgewandten Seite einen ersten verspiegelten Bereich mit 70% Intensität und auf ihrer augenzugewandten Seite eine vollflächige Entspiegelungsschicht aufweisen, und die zweite Einzelscheibe auf ihrer augenabgewandten Seite einen zweiten verspiegelten Bereich mit 70% Intensität und auf ihrer augenzugewandten Seite eine vollflächige Verspiegelungsschicht mit 70% Intensität aufweisen.

Die Erfindung erstreckt sich weiters auf ein Verfahren zur Herstellung verspiegelter Scheiben aus Glas oder Kunststoff welches folgende Schritte umfasst:
Aufbringen einer Maske auf der augenabgewandten Fläche einer ersten Einzelscheibe;
Aufbringen einer Verspiegelungsschicht auf der augenabgewandten Seite der ersten Einzelscheibe; Entfernung der Maske;
Gegebenenfalls Wiederholung der letzten drei Schritte mit anderen Masken;
Gegebenenfalls Aufbringen einer ganzflächigen Entspiegelungsschicht auf der augenzugewandten Seite der ersten Einzelscheibe;
Aufbringen einer Maske auf der augenabgewandten Fläche einer zweiten Einzelscheibe;
Aufbringen einer Verspiegelungsschicht auf der augenabgewandten Fläche der zweiten Einzelscheibe;
Entfernung der Maske;
Gegebenenfalls Wiederholung der letzten drei Schritte;
Gegebenenfalls Aufbringen einer ganzflächigen Verspiegelungsschicht auf der augenzugewandten Seite der zweiten Einzelscheibe;
Verbindung der ersten Einzelscheibe mit der zweiten Einzelscheibe mittels Verkleben, Verschmelzen oder Verkitten.

Gegebenenfalls können vor dem Aufbringen der Verspiegelungsschichten oder Entspiegelungsschichten eine oder mehrere Tönungsschichten aufgebracht werden.

Weitere erfindungsgemäße Merkmale sind der Beschreibung, den Zeichnungen und den Ansprüchen zu entnehmen.

Die Erfindung wird nun anhand von Ausführungsbeispielen in den folgenden Figuren näher beschrieben. Es zeigen
- Fig. 1:: eine schematische dreidimensionale Ansicht einer erfindungsgemäßen Ausführungsform der Scheibe;
- Fig. 2a-2b:: einen schematischen Querschnitt durch die erfindungsgemäße Ausführungsform aus Fig. 1;
- Fig. 3:: eine schematische Aufsicht auf die beiden Einzelscheiben einer erfindungsgemäßen Ausführungsform der Scheibe;
- Fig. 4:: einen schematischen Querschnitt durch die erfindungsgemäßen Einzelscheiben aus Fig. 3;
- Fig. 5a-5b:: ein schematisches Ablaufdiagramm einer Ausführungsform des erfindungsgemäßen Verfahrens.

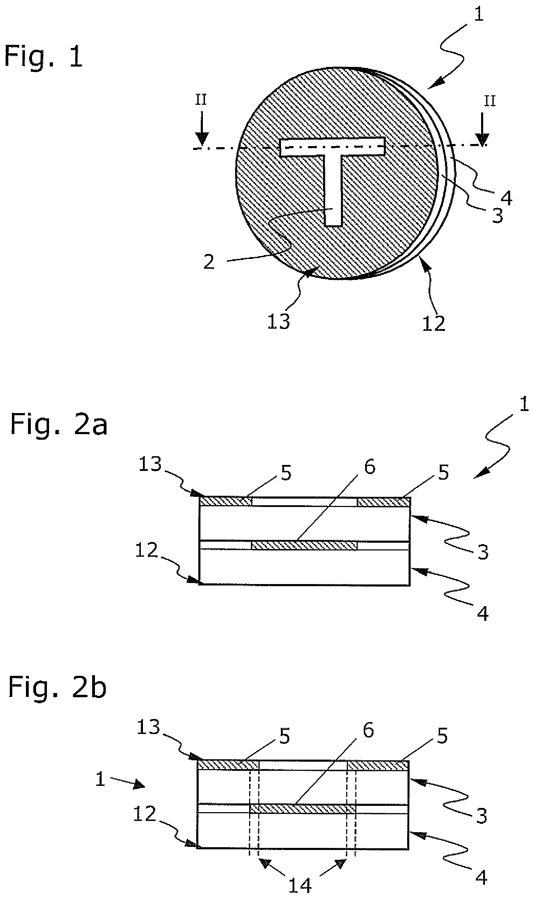

Fig. 1 zeigt eine schematische dreidimensionale Ansicht einer erfindungsgemäßen Ausführungsform der Scheibe 1. Auf der augenabgewandten Seite 13 der Scheibe 1 ist durch einen ersten verspiegelten Bereich 5 ein Verspiegelungsmuster 2, beispielsweise ein Logo oder eine Werbebotschaft, gebildet. Die Scheibe 1 umfasst eine erste Einzelscheibe 3 und eine zweite Einzelscheibe 4, wobei die beiden Scheiben als Verbund miteinander verbunden sind, beispielsweise verklebt, verschweißt oder verkittet.

Fig. 2a zeigt die Scheibe 1 aus Fig. 1 entlang der Schnittlinie II - II. Die Scheibe 1 umfasst eine erste Einzelscheibe 3 und eine zweite Einzelscheibe 4, die miteinander einen Verbund bilden. Auf der augenabgewandten Seite 13 der ersten Einzelscheibe 3 ist ein erster verspiegelter Bereich 5 gebildet. Ebenfalls auf der augenabgewandten Seite der zweiten Einzelscheibe 4 befindet sich ein zweiter verspiegelter Bereich 6. Ein Träger der Scheibe 1 befindet sich auf der augenzugewandten Seite 12 der zweiten Einzelscheibe 4 und durchblickt beide Einzelscheiben 3, 4. Er bemerkt somit beide verspiegelten Bereiche 5, 6. Ein Betrachter der Scheibe 1 befindet sich auf der augenabgewandten Seite 13 der ersten Einzelscheibe 3 und bemerkt nur den ersten verspiegelten Bereich 5.

Fig, 2b zeigt das erfindungsgemäße Ausführungsbeispiel aus Fig. 2a, wobei ein Überlappungsbereich 14 zwischen dem ersten verspiegelten Bereich 5 und dem zweiten verspiegelten Bereich 6 vorgesehen ist. Auch bei Ansicht der Scheibe aus einem leicht geneigten Winkel ist in diesem Fall die gesamte Durchblickfläche der Scheibe durch die verspiegelten Bereiche 5 und 6 bedeckt.

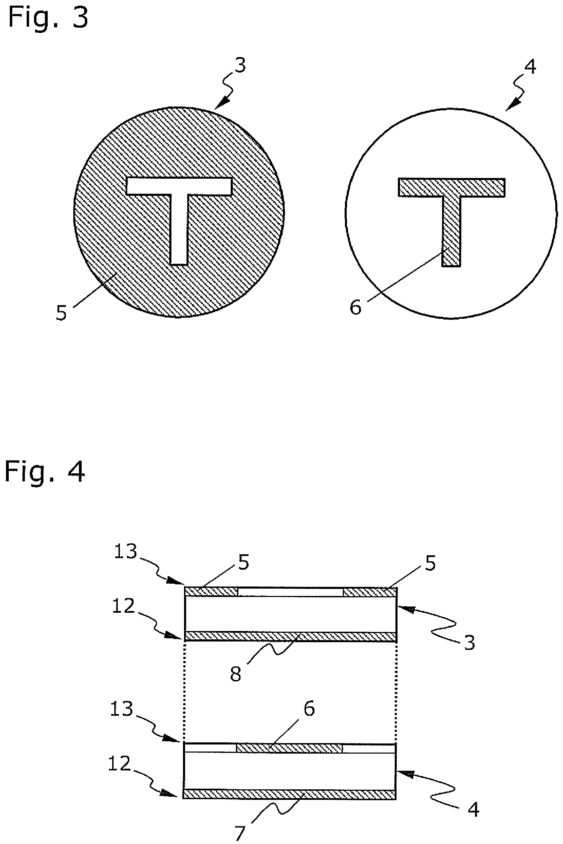

Fig. 3 zeigt eine schematische Aufsicht auf die beiden Einzelscheiben 3, 4 einer erfindungsgemäßen Ausführungsform der Scheibe 1. In diesem Fall sind die verspiegelten Bereiche 5 und 6 derart ausgeführt, dass ihre Vereinigung exakt die Durchblickfläche der Scheibe 1 ergibt. Mit anderen Worten, der zweite verspiegelte Bereich 6 ist das Negativ des ersten verspiegelten Bereichs 5. Selbstverständlich können auch mehr als zwei Einzelscheiben vorgesehen sein, wobei die Überlagerung sämtlicher verspiegelter Bereiche die Durchblickfläche der Scheibe ergeben.

Fig. 4 zeigt einen schematischen Querschnitt durch die erfindungsgemäßen Einzelscheiben 3, 4 aus Fig. 3, wobei die Einzelscheiben aus Gründen der besseren Übersichtlichkeit getrennt wurden. Die erste Einzelscheibe 3 weist auf ihrer augenabgewandten Seite 13 einen ersten verspiegelten Bereich 5, und auf ihrer augenzugewandten Seite 12 eine Entspiegelungsschicht 8 auf. Die zweite Einzelscheibe 4 weist ebenfalls auf ihrer augenabgewandten Seite 13 einen ersten verspiegelten Bereich 6, und auf ihrer augenzugewandten Seite 12 eine Tönungsschicht 9 auf.

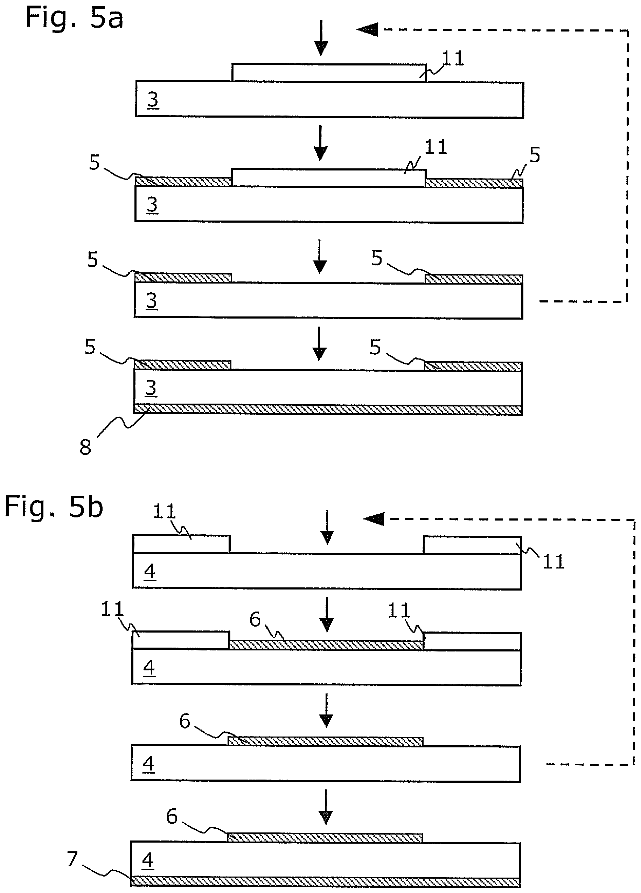

Die Figuren 5a und 5b zeigen ein schematisches Ablaufdiagramm einer Ausführungsform des erfindungsgemäßen Verfahrens. Fig. 5a zeigt das Aufbringen einer Maske 11 auf der augenabgewandten Fläche einer ersten Einzelscheibe 3, das Aufbringen einer ersten Verspiegelungsschicht 7 auf der augenabgewandten Seite der ersten Einzelscheibe 3; die Entfernung der Maske; und das Aufbringen einer ganzflächigen Entspiegelungsschicht 8 auf der augenzugewandten Seite der ersten Einzelscheibe.

Fig. 5b zeigt das Aufbringen einer Maske 11 auf der augenabgewandten Fläche einer zweiten Einzelscheibe 4; das Aufbringen einer zweiten Verspiegelungsschicht 7 auf der augenabgewandten Fläche der zweiten Einzelscheibe 4; die Entfernung der Maske 11; und das Aufbringen einer ganzflächigen Verspiegelungsschicht 7 auf der augenzugewandten Seite der zweiten Einzelscheibe 4.

Der letzte Verfahrensschritt, die Verbindung der ersten Einzelscheibe 3 mit der zweiten Einzelscheibe 4 mittels Verkleben, Verschmelzen oder Verkitten, wird in dieser Figur nicht gezeigt.

### Bezugszeichenliste

- 1: Scheibe
- 2: Verspiegelungsmuster
- 3: Erste Einzelscheibe
- 4: Zweite Einzelscheibe
- 5: Erster verspiegelter Bereich
- 6: Zweiter verspiegelter Bereich
- 7: Verspiegelungsschicht
- 8: Entspiegelungsschicht
- 9: Tönungsschicht
- 10: Fluoreszierende Substanzen
- 11: Maske
- 12: Augenzugewandte Seite / Trägerseite
- 13: Augenabgewandte Seite / Betrachterseite
- 14: Überlappungsbereich

## Patentansprüche

1. Zur Durchsicht geeignete Scheibe (1) aus Glas oder Kunststoff, auf der Verspiegelungsmuster (2) für Werbezwecke in Form von Logos, Symbolen oder Aufschriften vorhanden sind, wobei die Scheibe (1) als Verbund mehrerer Einzelscheiben (3, 4) ausgeführt ist, wobei auf jeder der Einzelscheiben (3, 4) ein oder mehrere verspiegelte Bereiche (5, 6) vorhanden sind, die Scheibe (1) eine erste Einzelscheibe (3) mit einem ersten verspiegelten Bereich (5) und eine zweite Einzelscheibe (4) mit einem zweiten verspiegelten Bereich (6) umfasst, wobei der zweite verspiegelte Bereich (6) das negative Abbild des ersten verspiegelten Bereichs (5) ist,
**dadurch gekennzeichnet, dass**
sich die verspiegelten Bereiche (5, 6) jeweils auf den augenabgewandten Seiten der Einzelscheiben (3, 4) befinden und
zumindest eine der Einzelscheiben (3, 4) auf ihrer augenzugewandten Seite eine ganzflächige Verspiegelungsschicht (7) oder Entspiegelungsschicht (8) aufweist.

2. Scheibe nach Anspruch 1, **dadurch gekennzeichnet, dass** sich die verspiegelten Bereiche (5, 6) der Einzelscheiben (3, 4) nicht überlappen und ihre Vereinigung die gesamte Durchblickfläche der Scheibe (1) bedeckt.

3. Scheibe nach einem der Ansprüche 1 bis 2, **dadurch gekennzeichnet, dass** die Einzelscheiben (3, 4) miteinander verklebt, verschmolzen oder verkittet sind.

4. Scheibe nach einem der Ansprüche 1 bis 3, **dadurch gekennzeichnet, dass** sich die verspiegelten Bereiche (5, 6) in ihrer Verspiegelungsfarbe und/oder Verspiegelungsintensität von den Einzelscheiben (3, 4) unterscheiden.

5. Scheibe nach einem der Ansprüche 1 bis 4, **dadurch gekennzeichnet, dass** die Einzelscheiben (3, 4) auf ihren augenzugewandten Seiten ganzflächige Verspiegelungsschichten (7) aufweisen, die maximal 50% der Intensität der Verspiegelung der verspiegelten Bereiche (5, 6) beträgt.

6. Scheibe nach einem der Ansprüche 1 bis 6, **dadurch gekennzeichnet, dass** die Einzelscheiben (3, 4) getönt sind und/oder eine Tönungsschicht (9) unter den verspiegelten Bereichen (5, 6) aufweisen.

7. Scheibe nach einem der Ansprüche 1 bis 7, **dadurch gekennzeichnet, dass** eine oder mehrere der Verspiegelungsschichten (7), Entspiegelungsschichten (8) oder Tönungsschichten (9) fluoreszierende Substanzen (10) enthalten.

8. Scheibe nach einem der Ansprüche 1 bis 8, **dadurch gekennzeichnet, dass** die erste Einzelscheibe (3) auf ihrer augenabgewandten Seite einen ersten verspiegelten Bereich (5) mit 70% Intensität und auf ihrer augenzugewandten Seite eine vollflächige Entspiegelungsschicht (8) aufweist, und die zweite Einzelscheibe (4) auf ihrer augenabgewandten Seite einen zweiten verspiegelten Bereich (6) mit 70% Intensität und auf ihrer augenzugewandten Seite eine vollflächige Verspiegelungsschicht (7) mit 70% Intensität aufweist.

9. Verfahren zur Herstellung einer zur Durchsicht geeigneten Scheibe (1) aus Glas oder Kunststoff nach einem der Ansprüche 1 bis 8 und 11, **dadurch gekennzeichnet, dass** es folgende Schritte umfasst:
a. Aufbringen einer Maske (11) auf der augenabgewandten Fläche einer ersten Einzelscheibe (3);
b. Aufbringen einer Verspiegelungsschicht (7) auf der augenabgewandten Seite der ersten Einzelscheibe (3);
c. Entfernung der Maske (11);
d. Gegebenenfalls Wiederholung der Schritte a) - c) mit anderen Masken;
e. Gegebenenfalls Aufbringen einer ganzflächigen Entspiegelungsschicht (8) auf der augenzugewandten Seite der ersten Einzelscheibe (3);
f. Aufbringen einer Maske (11) auf der augenabgewandten Fläche einer zweiten Einzelscheibe (4);
g. Aufbringen einer Verspiegelungsschicht (7) auf der augenabgewandten Fläche der zweiten Einzelscheibe (4);
h. Entfernung der Maske (11);
i. Gegebenenfalls Wiederholung der Schritte f) - h);
j. Gegebenenfalls Aufbringen einer ganzflächigen Verspiegelungsschicht (7) auf der augenzugewandten Seite der zweiten Einzelscheibe (4);
k. Verbindung der ersten Einzelscheibe (3) mit der zweiten Einzelscheibe (4) mittels Verkleben, Verschmelzen oder Verkitten.

10. Verfahren nach Anspruch 9, **dadurch gekennzeichnet, dass** vor dem Aufbringen der Verspiegelungsschichten (7) oder Entspiegelungsschichten (8) eine oder mehrere Tönungsschichten (9) aufgebracht werden.

11. Scheibe nach einem der Ansprüche 1 bis 8, **dadurch gekennzeichnet, dass** sich die verspiegelten Bereiche der Einzelscheiben zumindest bereichsweise überlappen.

## Claims

1. A disk (1) suitable for looking through made of glass or plastic on which mirror-coating patterns (2) for advertising purposes are present in the form of logos, symbols or labels, wherein the disk (1) is configured as a composite of a plurality of individual disks (3, 4), wherein one or multiple mirror-coated regions (5, 6) is/are present on each of the individual disks (3, 4), the disk (1) comprises a first individual disk (3) with a first mirror-coated region (5) and a second individual disk (4) with a second mirror-coated region (6), wherein the second mirror-coated region (6) is the negative image of the first mirror-coated region (5),
**characterized in that**
the mirror-coated regions (5, 6) are each located on the sides of the individual disks (3, 4) facing away from the eyes and
at least one of the individual disks (3, 4) has on its side facing the eyes a full-surface mirror-coating layer (7) or anti-reflection layer (8).

2. The disk according to claim 1, **characterized in that** the mirror-coated regions (5, 6) of the individual disks (3, 4) do not overlap and when combined they cover the entire see-through area of the disk (1).

3. The disk according to one of claims 1 to 2, **characterized in that** the individual disks (3, 4) are adhered, bonded or cemented to one another.

4. The disk according to one of claims 1 to 3, **characterized in that** the mirror-coated regions (5, 6) differ in their mirror-coating colour and/or mirror-coating intensity from the individual disks (3, 4).

5. The disk according to one of claims 1 to 4, **characterized in that** the individual disks (3, 4) have full-surface mirror-coating layers (7) on their sides facing the eyes amounting to a maximum of 50% of the intensity of the mirror-coating of the mirror-coated regions (5, 6).

6. The disk according to one of claims 1 to 5, **characterized in that** the individual disks (3, 4) are tinted and/or a have a layer of tint (9) below the mirror-coated regions (5, 6).

7. The disk according to one of claims 1 to 6, **characterized in that** one or a plurality of the mirror-coating layers (7), anti-reflection layers (8) or tint layers (9) contain fluorescent substances (10) .

8. The disk according to one of claims 1 to 7, **characterized in that** the first individual disk (3) has a first mirror-coated region (5) with 70% intensity on its side facing away from the eyes and a full-surface anti-reflection layer (8) on its side facing the eyes and the second individual disk (4) has on its side facing away from the eyes a second mirror-coated region (6) with 70% intensity and on its side facing the eyes a full-surface mirror-coating layer (7) with 70% intensity.

9. A method for producing a disk (1) for looking through from glass or plastic according to one of claims 1 to 8 and 11, **characterized in that** it comprises the following steps:
a. application of a mask (11) to the area facing away from the eyes of a first individual disk (3) ;
b. application of a mirror-coating layer (7) to the side of the first individual disk (3) facing away from the eyes;
c. removal of the mask (11);
d. where necessary, repetition of steps a) - c) using different masks;
e. where necessary, application of a full-face anti-reflection layer (8) to the side of the first individual layer (3) facing the eyes;
f. application of a mask (11) to the surface of a second individual disk (4) facing away from the eyes;
g. application of a mirror-coating layer (7) on the surface of the second individual disk (4) facing away from the eyes;
h. removal of the mask (11);
i. where necessary, repetition of steps f) - h);
j. where necessary, application of a full-face mirror-coating layer (7) to the side of the second individual disk (4) facing the eyes;
k. connection of the first individual disk (3) to the second individual disk (4) by means of adhesion, bonding or cementing.

10. The method according to claim 9, **characterized in that** one or multiple tint layers (9) are applied prior to the application of the mirror-coating layers (7) or anti-reflection layers (8).

11. A disk according to one of claims 1 to 8, **characterized in that** the mirror-coated regions of the individual disks overlap at least sectionally.

## Revendications

1. Disque permettant de voir à travers (1) en verre ou en plastique sur lequel se trouvent des motifs réfléchissants (2) et destiné à des fins publicitaires sous forme de logos, symboles ou d'inscriptions, le disque (1) étant réalisé sous forme d'un composite de plusieurs disques individuels (3, 4), une ou plusieurs zones réfléchissantes (5, 6) se trouvant sur chacun des disques individuels (3 4), le disque (1) comprenant un premier disque individuel (3) doté d'une première zone réfléchissante (5) et un second disque individuel (4) doté d'une seconde zone réfléchissante (6), la seconde zone réfléchissante (6) étant l'image négative de la première zone réfléchissante (5),
**caractérisé en ce que**
les zones réfléchissantes (5, 6) se trouvent respectivement sur des faces détournées des yeux des disques individuels (3, 4) et
qu'au moins un des disques individuels (3, 4) présente, sur sa face tournée vers les yeux, une couche réfléchissante (7) ou une couche antireflet (8) sur toute sa surface.

2. Disque selon une des revendications 1, **caractérisé en ce que** les zones réfléchissantes (5, 6) des disques individuels (3, 4) ne se chevauchent pas et que leur réunion couvre l'ensemble de la surface du disque (1) à travers laquelle on voit.

3. Disque selon une des revendications 1 à 2, **caractérisé en ce que** les disques individuels (3, 4) sont collés, fondus ou mastiqués.

4. Disque selon une des revendications 1 à 3, **caractérisé en ce que** les zones réfléchissantes (5, 6) se distinguent, par leur couleur de réflexion et/ou leur intensité de réflexion, des disques individuels (3, 4) .

5. Disque selon une des revendications 1 à 4, **caractérisé en ce que** les disques individuels (3, 4) présentent, sur leur face tournée vers les yeux, des couches réfléchissantes (7) dont l'intensité représente au maximum 50 % de celle de la réflexion des zones réfléchissantes (5, 6).

6. Disque selon une des revendications 1 à 5, **caractérisé en ce que** les disques individuels (3, 4) sont teintés et/ou présentent une couche teintée (9) en-dessous des zones réfléchissantes (5, 6).

7. Disque selon une des revendications 1 à 6, **caractérisé en ce qu'**une ou plusieurs des couches réfléchissantes, (7), des couches antireflet (8) ou des couches teintées (9) contiennent des substances fluorescentes (10) .

8. Disque selon une des revendications 1 à 7, **caractérisé en ce que** le premier disque individuel (3) présente, sur sa face détournée des yeux, une première zone réfléchissante (5) ayant 70 % d'intensité et, sur sa face détournée des yeux, une couche antireflet (8) sur toute sa surface, et que la seconde couche individuelle (4) présente, sur sa face détournée des yeux, une seconde zone réfléchissante (6) ayant 70 % d'intensité et, sur sa face tournée vers les yeux, une couche réfléchissante (7) sur toute sa surface ayant 70 % d'intensité.

9. Procédé de fabrication d'un disque permettant de voir à travers (1) en verre ou en plastique selon une des revendications 1 à 8 et 11, **caractérisé en ce qu'**il comprend les étapes suivantes :
a. pose d'un masque (11) sur la surface détournée des yeux d'un premier disque individuel (3) ;
b. pose d'une couche réfléchissante (7) sur la face détournée des yeux du premier disque individuel (3) ;
c. enlèvement du masque (11) ;
d. éventuellement répétition des étapes a) à c) avec d'autres masques ;
e. éventuellement pose d'une couche antireflet (8) sur toute la surface sur la face tournée vers les yeux du premier disque individuel (3) ;
f. pose d'un masque (11) sur la surface détournée des yeux d'un second disque individuel (4) ;
g. pose d'une couche réfléchissante (7) sur la surface détournée des yeux du second disque individuel (4) ;
h. enlèvement du masque (11) ;
i. éventuellement répétition des étapes f) à h),
j. éventuellement pose d'une couche réfléchissante (7) sur toute la surface sur la surface tournée vers les yeux du second disque individuel (4) ;
k. connexion du premier disque individuel (3) au second disque individuel (4) par collage, fusion ou masticage.

10. Procédé selon la revendication 9, **caractérisé en ce que**, avant la pose des couches réfléchissantes (7) ou des couches antireflet (8), une ou plusieurs couches teintées (9) sont appliquées.

11. Disque selon une des revendications 1 à 8, **caractérisé en ce que** les zones réfléchissantes des disques individuels se chevauchent du moins par endroits.
